# EUROPEAN PATENT APPLICATION

(11) **EP 4 765 544 A1**
(43) Date of publication of application: **24.06.2026**
(21) Application number: 25226032.8
(22) Date of filing: 19.12.2025
(51) Int. Cl.: H02J 3/14, H02J 3/32

(54) **SYSTEM AND METHOD FOR CONTROLLING A DUAL-FUEL HEATING SYSTEM IN A VIRTUAL POWER PLANT DURING PERIODS OF PEAK DEMAND TO REDUCE CONSUMPTION ON A POWER GRID**

(30) Priority: 23.12.2024 US 202463738163 P
(71) Applicant: Carrier Corporation, Palm Beach Gardens, FL 33418 (US)
(72) Inventor: KING, David, Indianapolis, 46231 (US)
(74) Representative: Dehns

(57) **Abstract**

A heating system (130) having a first heating appliance (132) powered by electricity provided via: a transmission line (160) from an electric power grid (150) that provides electricity to a plurality of buildings including the building (130); a second heating appliance (134) powered via a fuel; and a controller (131) operationally coupled to the first heating appliance (132) and the second heating appliance (134), and configured to receive control signals over a telecommunications network (240), wherein the control signals are associated with reducing consumption of electricity via the electric power grid (150), wherein, responsive to receiving the control signals, the controller (131) is configured to switch between powering the first heating appliance (132) via the electric power grid (150) and the second heating appliance (134) with the fuel.

## Description

### BACKGROUND

The embodiments are directed to virtual power plants and more specifically to a system and method for controlling a dual-fuel heating system in a virtual power plant during periods of peak demand to reduce consumption on a power grid.

Virtual power plants (VPPs) are utilized for reducing carbon while offsetting a high cost of peak energy production. Most VPP options implement a delay of energy-consuming devices or the utilization of smart energy storage to discharge at a predetermined time to meet energy demands. Most of these solutions utilize systems that are complex to configure and control.

### BRIEF SUMMARY

Disclosed is a heating system of a building, the heating system having: a first heating appliance powered by electricity provided via: a transmission line from an electric power grid that provides electricity to a plurality of buildings including the building; a second heating appliance powered via a fuel; and a controller operationally coupled to the first heating appliance and the second heating appliance, and configured to receive control signals over a telecommunications network, wherein the control signals are associated with reducing consumption of electricity via the electric power grid, wherein, responsive to receiving the control signals, the controller is configured to switch between powering the first heating appliance via the electric power grid and the second heating appliance with the fuel.

Optionally, the system includes an energy storage system (ESS) having a battery and a battery management system (BMS), wherein when the second heating appliance is powered instead of the first heating appliance, the controller is configured to receive further control signals over the telecommunications network and responsively control the BMS to transfer power stored in the ESS to the electric power grid.

Optionally, the control signals instruct the controller to power the second heating appliance instead of the first heating appliance for a period of time when a property of electricity transmitted over the electric power grid is above a threshold.

Optionally, the property of electricity is cost per kilowatt hour (kWh).

Optionally, the period of time is during peak demand.

Optionally, the system is a virtual power plant.

Optionally, the first heating appliance is a heat pump.

Optionally, the second heating appliance is a furnace.

Optionally, the fuel is natural gas.

Optionally, the fuel is propane.

Disclosed is a method of operating a heating system of a building, including receiving, by a controller, control signals over a telecommunications network, wherein the controller is operationally coupled to: a first heating appliance powered via electricity provided via a transmission line from an electric power grid that provides electricity to a plurality of buildings including the building; and a second heating appliance powered via a fuel, and wherein the control signals are associated with reducing consumption of electricity via the electric power grid; and switching, by the controller responsive to receiving the control signals, between powering the first heating appliance via the electric power grid and the second heating appliance with the fuel.

Optionally, the controller is operationally coupled to a battery management system (BMS) of an energy storage system (ESS) having a battery, and when the second heating appliance is powered instead of the first heating appliance, the method includes the controller, responsive to receiving further control signals over the telecommunications network, controlling the BMS to transfer power stored in the ESS to the electric power grid.

Optionally, the method includes powering, by the controller responsive to the control signals, the second heating appliance instead of the first heating appliance for a period of time when a property of electricity from the electric power grid is above a threshold.

Optionally, the property of electricity is cost per kilowatt hour (kWh).

Optionally, the period of time is during peak demand.

Optionally, the system is a virtual power plant.

Optionally, the first heating appliance is a heat pump.

Optionally, the second heating appliance is a furnace.

Optionally, the fuel is natural gas.

Optionally, the fuel is propane.

### BRIEF DESCRIPTION OF THE DRAWINGS

The invention is illustrated by way of example and not limited to the accompanying figures in which like reference numerals indicate similar elements.
FIG. 1 shows a system for controlling a dual-fuel heating system in a virtual power plant during periods of peak demand to reduce consumption on a power grid; and
FIG. 2 shows a method of controlling the dual-fuel heating system in a virtual power plant during periods of peak demand to reduce consumption on the power grid.

### DETAILED DESCRIPTION

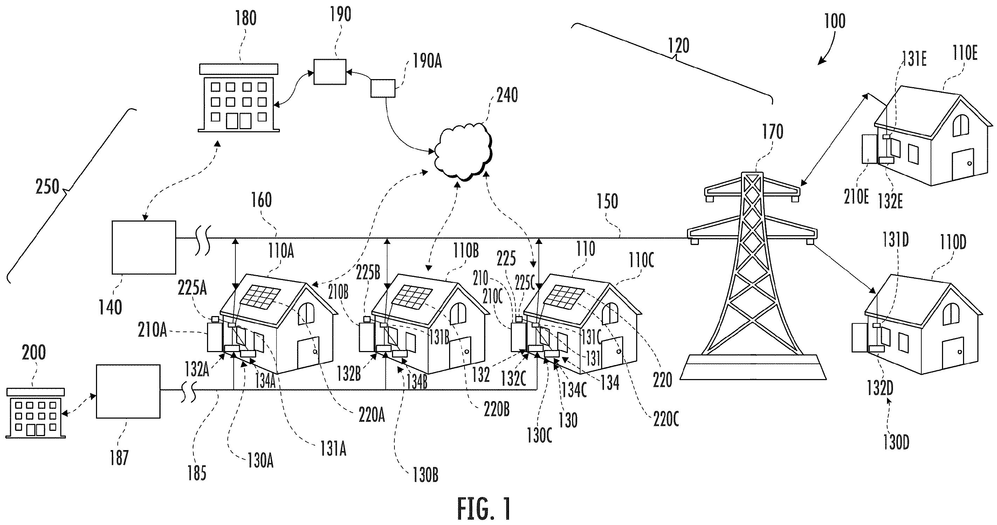

Turning to FIG. 1, a system 100 is shown that includes houses 110A-110D (generally 110) distributed in a geographic area 120. Each house 110 contains a heating, ventilation and/or air conditioning (HVAC) system 130A-130D (generally 130). Each of the houses 110 may have HVAC controllers 131A-131D (generally 131). The HVAC controllers 131 may be integrated into programable, smart, or communicating thermostats. Additional embodiments may include methods of communicating the desired fuel source directly with the indoor or outdoor HVAC equipment which allows for continued use of simple or preferred thermostat equipment while producing similar results of both thermal comfort and fuel use for the homeowner and utilities.

The HVAC system 130 in several of the houses 110A-110C is a dual-fuel heating system, e.g., including a heat pump (or first heating appliance) 132A-132C (generally 132) and a furnace (or second heating appliance) 134A-134C (generally 134). The heat pumps 132 and furnaces 134 are operationally coupled to the HVAC controllers 131. At least one of the HVAC systems 130D may be a single fuel heating system, such as a heat pump 132D. The single-fuel system may include an electric resistance heaters either in the ducts or distributed through the conditioned space to be used in times when the outdoor temperatures require more heating capacity than the heat pump system can produce, in order to maintain indoor thermal comfort. The aggregated use of these electric resistance heaters can affect grid stability, forcing peak power production methods which are often expensive and have a high carbon or pollutant cost.

Dual fuel systems are used to manage heating and cooling needs by combining two different energy sources. Dual fuel HVAC systems 130 use the heat pump 132 for moderate outdoor temperatures and switch to the gas furnace 134 for colder weather, which uses, e.g., natural gas or another fossil fuel such as propane, as non-limiting examples. A more renewable combustion fuel like RNG or hydrogen is within the scope of the disclosure. This ensures energy efficiency and comfort year-round.

The heat pumps 132 may receive electric power from an electric supply 140, which may be a power plant. The electric power may be distributed over a power grid 150, e.g., the U.S. electric power grid, via transmission lines 160 supported by transmission towers 170, operated in part by a local electric utility 180. The electric utility 180 may have a control station with a central controller 190. Furnaces 134 may receive gas from a gas supply 187, which may be an underground reservoir, utilizing underground gas lines 185, operated by a local gas utility 200.

The houses 110 with the dual fuel HVAC systems 130A-130C may also include energy storage systems (ESS) 210A-210C (generally 210) that may store power from solar panels 220A-220C (generally 220). The ESS 210 may include battery management systems (BMS) 225A-225C (generally 225). The ESS 210 may be utilized to alternatively power the heat pumps 132 or pay power back to the grid 150 based on control signals 190A issued by the central controller 190 and received by the BMSs 225, e.g., via the central controller 190 or the HVAC controllers 131. In one embodiment, the HVAC controllers 131, and optionally the BMSs 225, may be in operational communication with the central controller 190, e.g., with a processor discussed in greater detail below, over a telecommunications network 240, which may be a wired or wireless network, discussed in greater detail below.

Together the dual fuel HVAC systems 130A-130C, solar panels 220 and ESSs 210 may function as a virtual power plant (VPP) 250. The VPP 250 integrates distributed energy resources (DERs) including rooftop solar panels 220, ESSs 210, as non-limiting examples, to power home systems as well as provide power back to the grid 150. This energy can be utilized to provide power back to the one or more houses 110D that has an HVAC system 130D which consists of only a heat pump 132D. The resources of the VPP 250 work together to balance energy supply and demand on a large scale. The VPP 250 helps make the grid 150 cleaner and more efficient by reducing reliance on a traditional power plant 140. It can be appreciated that during the period of time that power is being returned to the grid 150, the dual fuel HVAC systems 130A-130C may utilize the gas powered furnaces 134 if needed to provide heat to the appliances within the houses 110A-110C, e.g., for generating hot water as a non-limiting example. It is to be appreciated that a furnace may only heat the indoor conditioned air. Within the scope of the disclosure are boilers or water heaters which utilize combustion which is capable of heating indoor conditioned spaces as well as domestic hot water.

According to the embodiments, the VPP 250 is utilized to control electrical consumption and does so for existing dual-fuel systems by denying the heat pumps 132 the ability to operate and instead utilizing the furnaces 134. This occurs via HVAC controllers 131, e.g., with internal processors discussed in greater detail below, and optionally the BMSs 225 receiving control signals 190A from the central controller 190, based on grid usage. During peak demand periods, for example, the central controller 190 will have the dual fuel systems 130A-130C run on gas, e.g., for heating, to conserve electricity consumption, and optionally send stored power to the grid 150. Optionally, where houses include ESSs 210, the central controller 190 may send signals 190A to the BMSs 225 or the HVAC controllers 131 to send stored power to the grid 150. In addition to reducing overall costs for homeowners of the homes with dual fuel HVAC systems 130A-130C, houses 110D without dual fuel systems or battery backups may run on cleaner energy during periods of time that would otherwise subject the grid 150 to peak demand. In another embodiment, home 130C does not have an ESS. The home 130C can still reduce power consumption so that more grid capacity is available to power 130D and contribute to a lower peak power demand, which reduces carbon and pollutant emissions.

In other embodiments, home 110D can participate in the VPP if occupants are willing to give up thermal comfort control. The HVAC controller 131D is managed via the central controller 190 to change indoor comfort settings by at least a certain amount, then credit is obtained for participating in, and contribute to, grid stability and carbon reduction. For homes 110A-C, the dual fuel system allows the occupants to have a more significant impact on grid stability and peak electric emissions without giving up thermal comfort.

In another example, a home 110E that has an ESS 210E and a single fuel HVAC system 130E controlled by an HVAC controller 131E. Such home 110E can contribute to the VPP 250 as long as the outdoor weather is not cold enough to require the electrical resistance heat. Once that happens, the occupants of such home 110E are significantly less available to give power to the grid 150 because they need to keep it for their own thermal comfort.

In one embodiment, home 110C is without the ESS and it has a dual fuel system. In this way, the home 110C can contribute more to the VPP 250 than home 130D while not giving up thermal comfort.

Comparing homes 110A to 110E, the home with dual fuel HVAC can, during heating mode, give more power to an unstable or high carbon cost grid 150 than the single fuel HVAC, without a need for investment in high-cost battery capacity and utilizing basically the same equipment footprint.

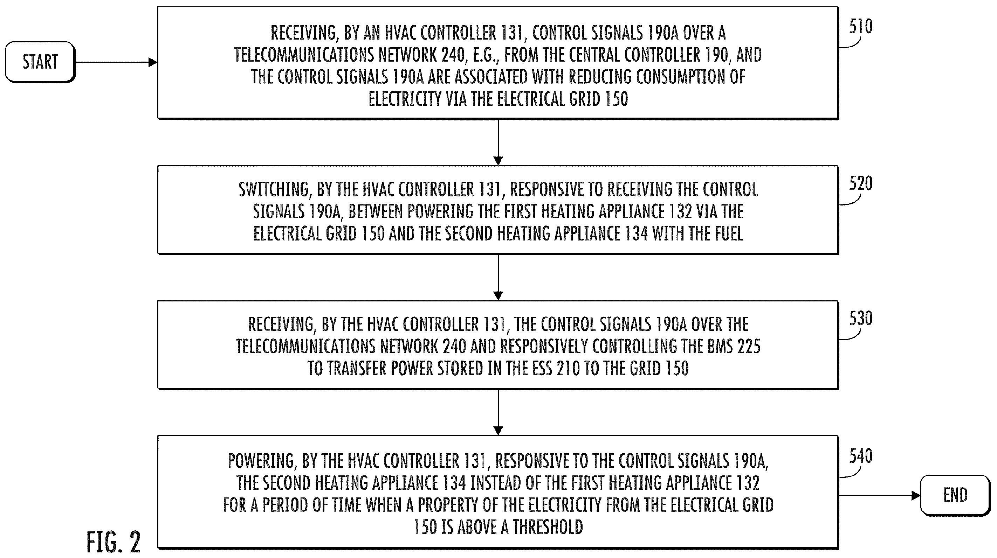

Turning to FIG. 2, a flowchart shows a method of operating a heating system 130 of a building (e.g., the house) 110. As shown in block 510 the method includes receiving, by an HVAC controller 131, control signals 190A over a telecommunications network 240, e.g., from the central controller 190, and the control signals 190A are associated with reducing consumption of electricity via the electric power grid 150. The controller 131 is operationally coupled to the first heating appliance (the heat pump) 132 powered via electricity provided via the transmission line 160 from the electric power grid 150 that provides electricity to a plurality of buildings 110A-110D including the building 110. The controller 131 is also operationally coupled to a second heating appliance (the furnace) 134 powered via a fossil fuel, which may be natural gas, propane or other fuel.. As indicated, a more renewable combustion fuel like RNG or hydrogen is within the scope of the disclosure.

As shown in block 520 the method includes switching, by the HVAC controller 131, responsive to receiving the control signals 190A, between powering the first heating appliance 132 via the electric power grid 150 and the second heating appliance 134 with the fossil fuel.

As indicated, the HVAC controller 131 is operationally coupled to the BMS 225 of the ESS 210. As shown in block 530, when the second heating appliance 134 is powered instead of the first heating appliance 132, the method includes receiving, by the HVAC controller 131, the control signals 190A over the telecommunications network 240 and responsively controlling the BMS 225 to transfer power stored in the ESS 210 to the grid 150.

As shown in block 540, the method includes powering, by the HVAC controller 131, responsive to the control signals 190A, the second heating appliance 134 instead of the first heating appliance 132 for a period of time when a property of the electricity from the electric power grid 150 is above a threshold. In one embodiment, the property is cost per kilowatt hour (kWh) and the period of time is during peak demand.

The embodiments provide a system for controlling dual fuel HVAC systems by a centralized control system that can interpret a value of running with non-grid, or low-grid, (e.g., fossil fuel) alternate energy source. Benefits of the embodiments include the ability to execute the disclosed process with programmable, smart or communicating thermostats. Additional embodiments may include methods of communicating the desired fuel source directly with the indoor or outdoor HVAC equipment which allows for continued use of simple or preferred thermostat equipment while producing similar results of both thermal comfort and fuel use for the homeowner and utilities. In addition, heating with gas can reduce electrical consumption during a heating mode by eliminating the requirement of using a compressor and only requiring a blower to run, which is less than two percent of the total energy consumed by the furnace.

Wireless connections identified above may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Other applicable protocols include Low Power WAN (LPWAN), which is a wireless wide area network (WAN) designed to allow long-range communications at low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radio-frequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and LTE Category M1 internet of things (LTE Cat M1-IOT or LTE-M). Wireless communications for the disclosed systems may include cellular, e.g. 2G/3G/4G/5G (etc.). The above is not intended on limiting the scope of applicable wireless technologies.

Wired connections identified above may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a sever/client protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allow microcontrollers and devices to communicate with each other in applications without a host computer. CAN is a message-based protocol released by the International Organization for Standards (ISO). The above is not intended to limit the scope of applicable wired technologies.

As indicated, when data is transmitted over a network between end processors, the data may be transmitted in raw form or may be processed in whole or part at any one of the end processors or an intermediate processor, e.g., at a cloud service or other processor. The data may be parsed at any one of the processors, partially or completely processed or complied, and may then be stitched together or maintained as separate packets of information.

Each processor identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes a device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the invention. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A heating system (130) of a building (110), the heating system comprising:
a first heating appliance (132) powered by electricity provided via: a transmission line (160) from an electric power grid (150) that provides electricity to a plurality of buildings including the building;
a second heating appliance (134) powered via a fuel; and
a controller (131) operationally coupled to the first heating appliance and the second heating appliance, and configured to receive control signals over a telecommunications network (240),
wherein the control signals are associated with reducing consumption of electricity via the electric power grid,
wherein, responsive to receiving the control signals, the controller is configured to switch between powering the first heating appliance via the electric power grid and the second heating appliance with the fuel.

2. The system of claim 1, further comprising:
an energy storage system, ESS, (210) having a battery and a battery management system, BMS, (225),
wherein when the second heating appliance is powered instead of the first heating appliance, the controller is configured to receive further control signals over the telecommunications network and responsively control the BMS to transfer power stored in the ESS to the electric power grid.

3. The system of claim 1 or 2, wherein the control signals instruct the controller to power the second heating appliance instead of the first heating appliance for a period of time when a property of electricity transmitted over the electric power grid is above a threshold.

4. The system of claim 3, wherein the property of electricity is cost per kilowatt hour (kWh).

5. The system of any of claims 3-4, wherein the period of time is during peak demand.

6. The system of any of claims 1-5, wherein the system is a virtual power plant.

7. The system of any of claims 1-6, wherein the first heating appliance is a heat pump, and/or wherein the second heating appliance is a furnace.

8. The system of any of claims 1-7, wherein the fuel is natural gas, or wherein the fuel is propane.

9. A method of operating a heating system of a building (110), comprising:
receiving, by a controller (131), control signals over a telecommunications network (240),
wherein the controller is operationally coupled to:
a first heating appliance (132) powered via electricity provided via a transmission line (160) from an electric power grid (150) that provides electricity to a plurality of buildings including the building; and
a second heating appliance (134) powered via a fuel, and
wherein the control signals are associated with reducing consumption of electricity via the electric power grid; and
switching, by the controller responsive to receiving the control signals, between powering the first heating appliance via the electric power grid and the second heating appliance with the fuel.

10. The method of claim 9, wherein
the controller is operationally coupled to a battery management system, BMS, (225) of an energy storage system, ESS, (210) having a battery, and
when the second heating appliance is powered instead of the first heating appliance, the method includes the controller, responsive to receiving further control signals over the telecommunications network, controlling the BMS to transfer power stored in the ESS to the electric power grid.

11. The method of claim 9 or 10, comprising powering, by the controller responsive to the control signals, the second heating appliance instead of the first heating appliance for a period of time when a property of electricity from the electric power grid is above a threshold.

12. The method of claim 11, wherein the property of electricity is cost per kilowatt hour (kWh), and/or wherein the period of time is during peak demand.

13. The method of any of claims 9-12, wherein the system is a virtual power plant.

14. The method of any of claims 9-13, wherein the first heating appliance is a heat pump, and/or wherein the second heating appliance is a furnace.

15. The method of any of claims 9-14, wherein the fuel is natural gas, or wherein the fuel is propane.
